# EUROPEAN PATENT APPLICATION

(11) **EP 1 008 323 A1**
(43) Date of publication of application: **14.06.2000**
(21) Application number: 99309456.4
(22) Date of filing: 26.11.1999
(51) Int. Cl.: A47K 11/04

(54) **Toilet training aid**

(30) Priority: 27.11.1998 GB 9825902
(71) Applicant: Jackel International Limited, Cramlington Northumberland NE23 7RH (GB); Robertson, James Lake, Bagillt, Flintshire CH6 6EE (GB)
(72) Inventor: Robertson, James Lake, Bagillt, Flintshire CH6 6EE (GB)
(74) Representative: Roberts, Gwilym Vaughan

(57) **Abstract**

A toilet training aid, for example a potty 2, includes a seating surface 4 inclined at an angle θ to the horizontal. As a result an infant 1 seated on the potty tends to lean forwardly such that the direction of force of defecation B is optimised.

## Description

The invention relates to a toilet training aid, for example a potty used in toilet training toddlers.

Potties are very well-known as an intermediate between the infant using a nappy or diaper and using the lavatory, and commonly comprise a bowl-type arrangement on which the infant sits, which receives the infants' faeces or urine for subsequent disposal. Various modifications to this basic concept have been proposed in the state of the art including changing the profile of the potty for the comfort of the infant or to make sure that misdirection is avoided.

Known potties, however, can give rise to problems in that they do not take into account biological/ergonomic aspects of the act of defecation. In particular, known arrangements have neither identified nor attempted to solve the problem of improving this aspect.

The invention is set out in the appended claims. In particular the provision of an inclined seating surface ensures that the infant sits in the optimum position for ease of use of the potty, leaning forward relative to the vertical and with the thighs correspondingly inclined relative to the horizontal. In addition in a preferred embodiment where the angle of inclination of the potty is adjustable, the optimum angle can be selected empirically and/or taking into account the gender or size of the child.

Embodiments of the invention will now be described, by way of example, with reference to the drawings, of which:-
Fig. 1 shows in schematic view a conventional potty with the position of the child;
Fig. 2 shows an example of a potty with an inclined seating surface; and
Fig. 3 shows a potty with an adjustable angle inclined seating surface.

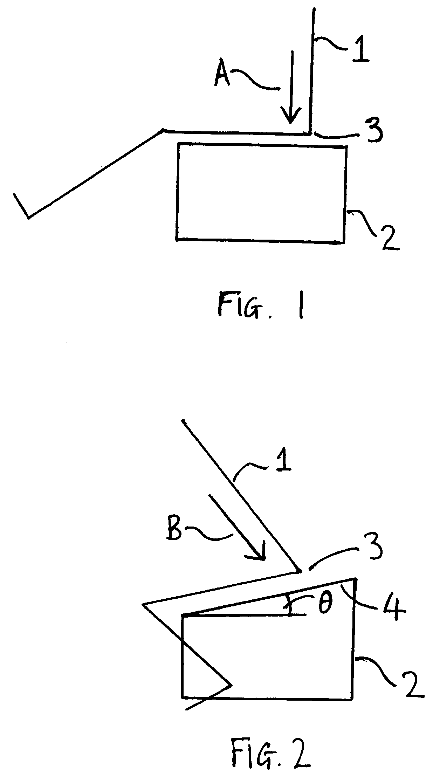

Referring now to the drawings, a conventional potty 2 is shown schematically at Fig. 1 with the position of an infant 1 shown schematically. The direction of force used to defecate is shown by arrow A. According to this conventional arrangement the direction of the force is directed on to the sacrum generally designated at 3 rather than in the optimum direction of defecation.

Referring now to Fig. 2, and where like reference numerals designate like elements throughout, the infant 1 is seated on a potty 2 having an inclined top surface 4. The inclination is such that the seating surface lies substantially in a common plane inclined to the horizontal. It will be seen that the inclination of the seating surface of the potty 2 is arranged such that the rear of the potty is higher than the front of the potty. The angle of inclination is designated by θ which is between 10 and 40 degrees to the horizontal. The angle is achieved simply by inclining the upper surface of the potty appropriately. For example where the potty is of plastic material the preferred shape can be moulded. As a result when the infant 1 is seated on the potty the infants' natural inclination is to lean forward. As a result the sacrum 3 is drawn up, making the direction of force (designated by arrow B) more effective for defecation. Accordingly the infant is likely to be encouraged in its use of the potty making the toilet training process quicker and easier.

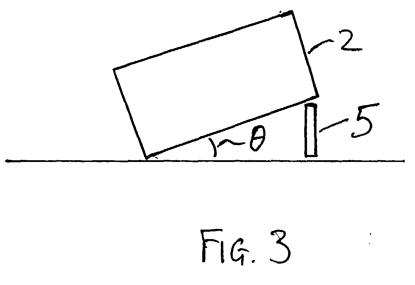

Referring to Fig. 3 an alternative possibility is shown in which a prop 5 of any suitable type is provided below the potty to provide the angle of inclination θ. The prop 5 is preferably integral with the potty 2 and of adjustable height for example using a screw-thread mechanism. As a result any desired inclination can be achieved to obtain the effects of the invention. One or more props, or appropriately shaped props can be included for stability.

As a result the invention provides an arrangement which has ergonomic and biological improvements for the infants, in particular allowing the sacrum to be raised and/or the angle of force and defecation to be optimised. It will be appreciated that any appropriate means can be used for introducing an angle of inclination with the potty including any adjustable prop means as shown in Fig. 3, the underlying requirement being that the base of the potty defines a lower support plane and the seating surface is appropriately inclined to that plane.

## Claims

1. A toilet training aid comprising a receptacle having a seating surface, the receptacle being arranged such that, in use, the seating surface is inclined at an angle to the horizontal.

2. A toilet training aid as claimed in Claim 1 for which the angle of inclination is in the range 10 to 40 degrees to the horizontal.

3. A toilet training aid as claimed in Claim or Claim 2 in which the toilet training aid includes a base surface arranged to lie flat on a horizontal support surface, and a seating surface arranged at the inclined angle to the base surface.

4. A toilet training aid as claimed in Claim 1 or Claim 2 including a base surface and an adjustable prop provided at a rear end thereof, adjustable to obtain a desired inclination of a seating surface.
